# FASCICULE DE BREVET EUROPEEN

(11) **EP 1 738 992 B1**
(45) Date de publication et mention de la délivrance du brevet: **16.07.2008**
(21) Numéro de dépôt: 06300522.7
(22) Date de dépôt: 29.05.2006
(51) Int. Cl.: B62D 25/06

(54) **Elément de carrosserie pour la toiture d'un arc de pavillon et véhicule automobile comportant de tels éléments de carrosserie**
Seitenteil für ein Dach einer Kraftfahrzeugkarosserie, und Kraftfahrzeug mit einem derartigen Seitenteil
Roof arch for the body structure of a motor vehicle, and motor vehicle with such a roof arch.

(30) Priorité: 30.06.2005 FR 0506713
(43) Date de publication de la demande: 03.01.2007
(73) Titulaire: PEUGEOT CITROËN AUTOMOBILES S.A., 78140 Vélizy Villacoublay (FR)
(72) Inventeur: Loche, Denis, 91300, Massy (FR); Henri, Jérome, 78580, Les Alluets le Roi (FR)

(56) Documents cités:
- DE-A1- 3 705 986
- FR-A- 2 847 875
- US-B1- 6 340 169

## Description

L'invention concerne un élément de carrosserie pour la doublure d'un arc de pavillon dans un véhicule automobile, ainsi qu'un véhicule automobile comportant de tels éléments.

On peut, par exemple, citer le brevet DE 3 705 986, qui se rapporte à une structure de véhicule, possédant deux ouvertures latérales, aptes à accueillir des éléments permettant de passer de une porte sur chaque coté, à deux portes. Ce brevet décrit une structure selon le préambule de la revendication 1.

Lors de la conception d'un véhicule automobile, le fabricant-concepteur doit répondre à au moins trois exigences, à savoir présenter le plus grand nombre de variantes possibles du modèle à développer afin d'intéresser une clientèle la plus large possible, répondre à de nouvelles exigences techniques, par exemple dans le domaine de la stabilité de la carrosserie, et utiliser le plus possible des éléments standardisés afin de limiter la diversité de pièces à approvisionner pour la production de l'ensemble des modèles de véhicule du fabricant. L'utilisation de pièces standardisées est parfois limitée, voire même impossible, lorsqu'il s'agit de pièces ou d'éléments de la carrosserie, de la suspension ou d'autres parties du véhicule, lorsqu'il s'agit de pièces ou d'éléments typiquement liés à la forme du véhicule, notamment la forme de la carrosserie.

Les pièces spécifiques de plusieurs variantes d'un même modèle de véhicule automobile varient les unes des autres par exemple du fait de la différence de conception entre un véhicule trois portes ou un véhicule cinq portes ou, de manière plus générale, entre un véhicule ayant deux portes latérales et une variante du même type de véhicule ayant quatre portes latérales.

Ainsi, jusqu'à présent, dans des véhicules de même type ayant respectivement deux ou quatre portes latérales, on utilise des doublures d'arc de pavillon droite et gauche spécifiques pour chaque silhouette. De plus, des éléments de renfort sont soudés aux endroits, sur les arcs de pavillon, servant à la liaison avec des arceaux centraux avant et arrière de pavillon.

Les éléments de doublure d'arc utilisés selon la conception décrite ci avant pour un même modèle de véhicule automobile se distinguent les uns des autres suivant différents critères parmi lesquels il y a , par exemple, la géométrie des différents montants avec lesquels les arceaux doivent être réunis. A ce sujet, il y a, par exemple, une différence entre les montants de baies arrière utilisés dans un véhicule ayant deux portes latérales et les montants de porte disposés sur chaque côté de la carrosserie d'un véhicule entre la porte avant et la porte arrière d'un véhicule ayant quatre portes latérales.

Cette différence est due aussi bien à l'emplacement du montant sur l'arc de pavillon et à la fixation d'arceaux centraux sur les arcs de pavillon droit et gauche. Par ailleurs, les doublures d'arc reçoivent aussi les poignées de maintien respectivement pour le passager avant droit et les passagers arrière, éventuellement aussi pour le conducteur du véhicule. Les poignées sont montées sur les doublures d'arcs à l'aide de supports en plastique qui servent comme entretoises entre l'arceau et la doublure d'arc correspondante. L'ensemble est clipsé puis vissé sur la doublure de l'arc de pavillon.

Suite à des changements intervenus dans des exigences techniques telles que, par exemple, la force que la poignée doit pouvoir supporter, de nouvelles conceptions étaient nécessaires pour les doublures d'arc de pavillon.

Le but de l'invention est de proposer un élément de carrosserie pour la doublure d'un arc de pavillon dans un véhicule automobile, qui puisse répondre aux exigences réglementaires, et qui puisse être utilisé aussi bien pour les véhicules ayant deux portes latérales de chaque côté que dans des véhicules ayant une seule porte latérale de chaque côté.

Le but de l'invention est atteint avec un élément de carrosserie pour la doublure d'un arc de pavillon dans un véhicule automobile, la carrosserie comprenant des arcs de pavillon droit et gauche ainsi que des arcs de pavillon centraux avant et arrière. L'élément de carrosserie est conformé de manière unique pour la doublure d'un arc de pavillon, droit ou gauche, respectivement d'un véhicule automobile comportant deux portes latérales ou d'un véhicule automobile comportant quatre portes latérales. L'élément de carrosserie est par ailleurs pourvu de supports de poignée solidaires de l'élément de carrosserie et disposés à des positions convenant aux deux versions de véhicule énoncées, savoir avec deux ou avec quatre portes latérales.

Grâce aux dispositions de l'invention, les doublures d'arc de pavillon pour un même type de véhicule automobile, qu'il soit conçu et fabriqué avec une porte latérale de chaque côté ou avec deux portes latérales de chaque côté, ne se distinguent plus que par le côté de la carrosserie pour lequel elles sont destinées. On peut donc utiliser le même élément de carrosserie, sur le même côté de la carrosserie, sans distinction de la version deux portes ou quatre portes du véhicule.

De plus, les supports de poignées étant maintenant solidaires de l'élément de carrosserie, ces supports sont plus forts et plus résistants que des inserts ou éléments intercalaires en plastique utilisés avant l'invention. En plus, du fait que les supports de poignée sont solidaires de l'élément de carrosserie, le montage des arceaux et des poignées peut être effectué de manière plus rapide qu'auparavant et de manière plus facile du fait que la doublure d'arc et la pièce intercalaire ne forment qu'un seul élément.

La présente invention concerne également les caractéristiques ci-après considérées isolément ou selon toute combinaison techniquement possible:
- les supports de poignée sont soudés sur l'élément de carrosserie ;
- les supports de poignés sont conformés pour recevoir des poignés par clipsage ;
- les supports de poignés sont conformés pour recevoir des poignés par vissage ;
- l'élément de carrosserie comporte deux supports de poignée par poignée ;
- l'élément de carrosserie comporte un seul support de poignée par poignée ;
- l'élément de carrosserie comporte un élément de renfort destiné à augmenter la protection contre des chocs latéraux ;
- l'élément de carrosserie comprend un élément soudé de renfort protégeant l'élément de carrosserie contre des déformations résultant d'un choc latéral transmis par un des arceaux centraux.

Le but de l'invention est également atteint avec un véhicule automobile comprenant des éléments de carrosserie suivant la description ci-avant.

D'autres caractéristiques et avantages de la présente invention ressortiront de la description ci-après d'un mode de réalisation de l'invention, la description étant faite en référence aux dessins. Dans ces dessins:
- la figure 1 montre un mode de réalisation d'une doublure d'arc de pavillon utilisable indifféremment pour la carrosserie d'un véhicule ayant une ou deux portes latérales sur chaque côté ;
- la figure 2 montre la doublure de la figure 1 avec deux supports de poignées ;
- la figure 3 montre un ensemble d'une doublure d'arc de la figure 1, d'un montant et d'un arceau latéral pour un véhicule ayant une seule porte latérale sur chaque côté ;
- la figure 4 montre un ensemble de la figure 3 pour un véhicule ayant deux portes latérales sur chaque côté ; et
- la figure 5 rappelle la structure générale de la partie supérieure d'une carrosserie d'un véhicule automobile.

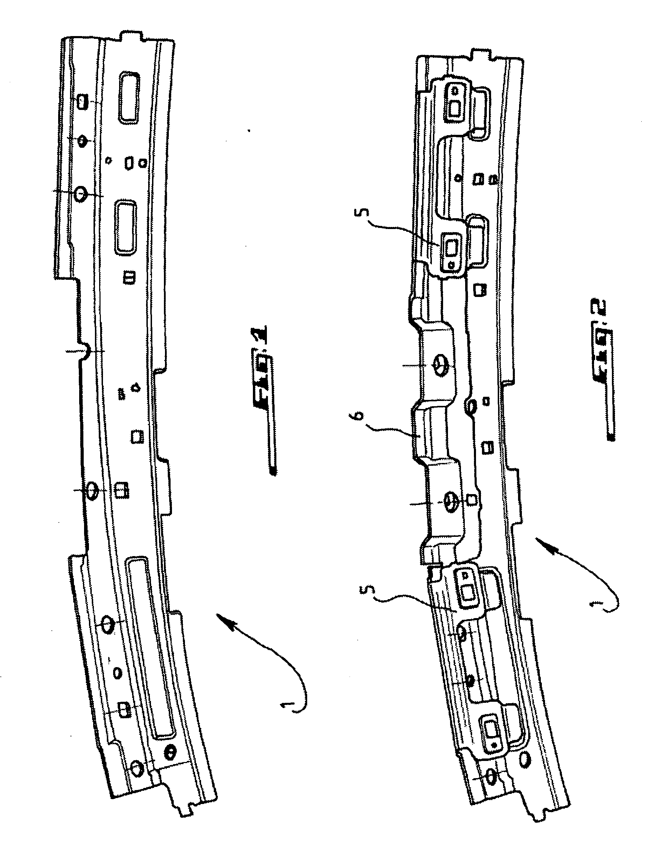

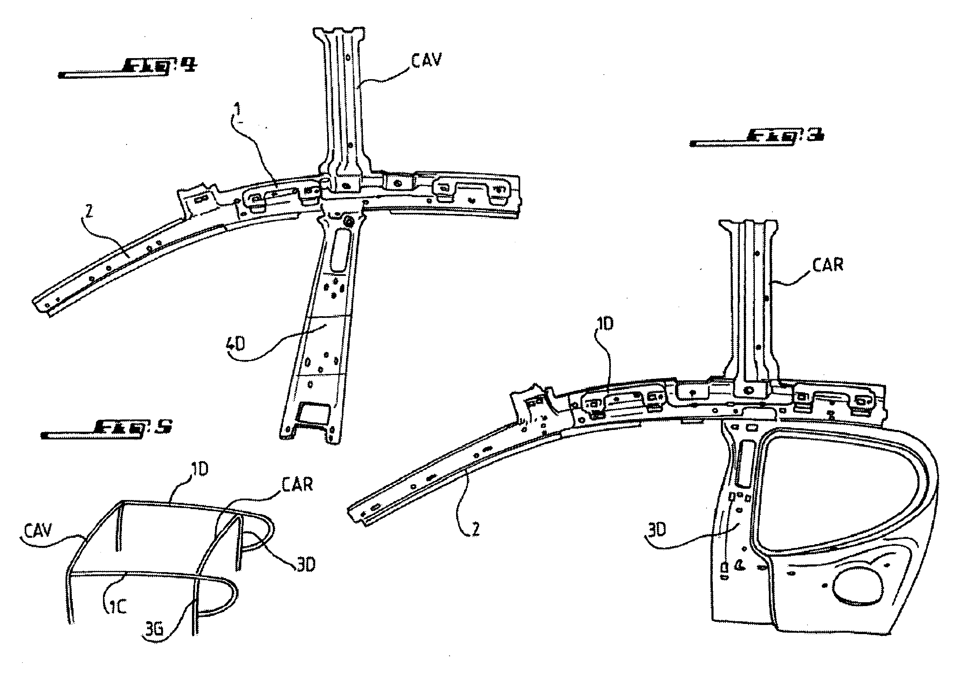

Les figures 1 et 2 montrent un élément de carrosserie 1 pour la doublure d'un arc de pavillon 2 dans un véhicule automobile. Une carrosserie d'un véhicule automobile comprend, comme cela est rappelé sur la figure 5, un arc de pavillon droit 2D, un arc de pavillon gauche 2G, des arcs de pavillon centraux avant et arrière CAV, CAR, ainsi que des montants de baie 3D du côté droit et 3G du côté gauche du véhicule lorsqu'il s'agit d'une carrosserie pour un véhicule ayant un seule porte latérale de chaque côté du véhicule ou, le cas échant, des montants de porte 4D pour le côté droit et 4G pour le côté gauche du véhicule lorsqu'il s'agit d'une carrosserie pour un véhicule ayant deux portes latérales de chaque côté du véhicule.

L'élément de carrosserie 1 est conformé, pour les différentes variantes d'un même modèle de véhicule automobile, spécifiquement pour la doublure d'un arc de pavillon disposé à droite ou pour la doublure d'un arc de pavillon disposé à gauche du véhicule. Mais pour le côté désigné, droit ou gauche, de ce modèle, l'élément de carrosserie est conformé de manière unique, que le véhicule automobile comporte deux portes latérales ou que le véhicule comporte quatre portes latérales.

Le véhicule automobile comportant deux portes latérales peut être un véhicule à trois volumes, c'est-à-dire avec un coffre traditionnel, et avec une porte latérale de chaque côté. Mais il peut également s'agir d'un véhicule dit à trois portes, c'est-à-dire une porte de chaque côté et un hayon à l'arrière. De manière analogue, les véhicules automobiles comportant quatre portes latérales peuvent être ou des véhicules à trois volumes, c'est-à-dire avec un coffre traditionnel et avec deux portes latérales de chaque côté ou des véhicules dits à cinq portes, c'est-à-dire avec deux portes latérales de chaque côté et un hayon arrière.

L'élément de carrosserie 1 est par ailleurs pourvu de deux supports de poignées 5 solidaires de l'élément de carrosserie 1 et disposés à des positions convenant aussi bien aux véhicules ayant deux portes latérales qu'à ceux ayant quatre portes latérales.

Sur l'élément de carrosserie 1 représenté sur les figures 1 et 2, les deux supports de poignées 5 sont identiques et disposés à des positions dont une première position est pratique pour un passager ou le conducteur du véhicule assis sur les sièges avant du véhicule et à une seconde position pratique pour les passagers assis sur les sièges arrière du véhicule.

Suivant une variante non représentée sur les dessins, mais facile à s'imaginer sur la base de ce qui est représenté sur la figure 2, il est également concevable de prévoir deux supports de poignées par poignée, l'élément de carrosserie 1 comportant alors quatre supports de poignées. Chaque support de poignée pourrait alors avoir une forme ressemblant à la partie droite ou à la partie gauche des supports représentés sur la figure 2, abstraction faite de la pièce de liaison entre les deux parties.

Quels que soient le nombre et la forme des supports de poignées choisis, les supports de poignées sont solidaires de l'élément de carrosserie, par exemple par le fait que les supports de poignées sont soudés sur l'élément de carrosserie 1.

L'élément de carrosserie comporte par ailleurs un élément de renfort 6 destiné à augmenter la protection contre des chocs latéraux. Plus particulièrement, l'élément de carrosserie 1 comprend un élément soudé de renfort protégeant contre des déformations résultant d'un choc latéral transmis par un des arceaux centraux CAV ou CAR.

L'élément de carrosserie de l'invention répond aux exigences réglementaires modifiées et notamment à des augmentations de prestations de tenue aux efforts sur les poignées de maintien disposées à droite et à gauche à l'intérieur du véhicule, ainsi qu'à des exigences augmentées de protection à l'encontre de chocs.

Les supports de poignées 5 sont identiques entre eux et soudés sur les quatre positions communes respectivement pour des véhicules à trois ou à cinq portes, à savoir une position avant droite, une position avant gauche, une position arrière droite et une position arrière gauche. Les poignées elles-mêmes sont clipsées puis vissées sur les supports de poignées et supportent des charges d'un minimum de 120 kg chacun.

L'élément de renfort 6 est soudé dans une position valable pour les deux types de véhicule, à savoir à trois portes ou à cinq portes ou, de manière plus générale, pour des carrosseries ayant une porte latérale de chaque côté ou pour des carrosseries ayant deux portes latérales de chaque côté. Les montants de baie 3G et 3D ou les montants de porte sont soudés sur les arcs de pavillon et sur la doublure d'arc sur une position commune à laquelle arrivent sur l'arceau respectivement l'arceau central et le montant de baie ou le montant de porte, et où l'arceau central est soudé sur la doublure via l'élément de renfort 6.

## Revendications

1. Elément de carrosserie (1) pour la doublure d'un arc de pavillon (2) dans un véhicule automobile, la carrosserie comprenant des arcs de pavillon droit (2D) et gauche (2G) ainsi que des arcs de pavillon centraux avant et arrière (CAV, CAR),
l'élément de carrosserie (1) étant conformé de manière unique pour la doublure d'un arc de pavillon, droit (2D) ou gauche (2G), respectivement d'un véhicule automobile comportant deux portes latérales ou d'un véhicule automobile comportant quatre portes latérales, **caractérisé en ce que** l'élément de carrosserie (1) est pourvu de supports de poignée (5) solidaires de l'élément de carrosserie (1) et disposés à des positions convenant aux deux versions de véhicule énoncées.

2. Elément de carrosserie selon la revendication 1, **caractérisé en ce que** les supports de poignée (5) sont soudés sur l'élément de carrosserie (1).

3. Elément de carrosserie selon la revendication 1 ou 2, **caractérisé en ce que** les supports de poignés (5) sont conformés pour recevoir des poignés par clipsage.

4. Elément de carrosserie selon la revendication 1 ou 2, **caractérisé en ce que** les supports de poignés (5) sont conformés pour recevoir des poignés par vissage.

5. Elément de carrosserie selon l'une quelconque des revendications 1 à 4, **caractérisé en ce qu'**il comporte deux supports de poignée par poignée.

6. Elément de carrosserie selon l'une quelconque des revendications 1 à 4, **caractérisé en ce qu'**il comporte un support de poignée (5) par poignée.

7. Elément de carrosserie selon l'une quelconque des revendications 1 à 6, **caractérisé en ce qu'**il comporte un élément de renfort (6) destiné à augmenter la protection contre des chocs latéraux.

8. Elément de carrosserie selon l'une quelconque des revendications 1 à 7, **caractérisé en ce qu'**il comprend un élément soudé (6) de renfort protégeant contre des déformations résultant d'un choc latéral transmis par un des arceaux centraux (C).

9. Véhicule automobile, **caractérisé en ce qu'**il comprend un élément de carrosserie selon l'une quelconque des revendications 1 à 8.

## Claims

1. Body element (1) for lining a roof arch (2) in a motor vehicle, the body comprising right (2D) and left (2G) roof arches along with central front and rear (CAV, CAR) roof arches, the body element (1) being configured in a single manner for lining a right (2D) or left (2G) roof arch of either a motor vehicle having two side doors or a motor vehicle having four side doors, **characterized in that** the body element (1) is provided with handle supports (5) secured to the body element (1) and arranged at positions appropriate to the two stated vehicle versions.

2. Body element according to Claim 1, **characterized in that** the handle supports (5) are welded to the body element (1).

3. Body element according to Claim 1 or 2, **characterized in that** the handle supports (5) are configured to receive handles by clipping.

4. Body element according to Claim 1 or 2, **characterized in that** the handle supports (5) are configured to receive handles by screwing.

5. Body element according to any one of Claims 1 to 4, **characterized in that** it comprises two handle supports per handle.

6. Body element according to any one of Claims 1 to 4, **characterized in that** it comprises one handle support (5) per handle.

7. Body element according to any one of Claims 1 to 6, **characterized in that** it comprises a reinforcing element (6) intended to increase protection against side impacts.

8. Body element according to any one of Claims 1 to 7, **characterized in that** it comprises a welded reinforcing element (6) protecting against deformations resulting from a side impact transmitted by one of the central arches (C).

9. Motor vehicle, **characterized in that** it comprises a body element according to any one of Claims 1 to 8.

## Patentansprüche

1. Karosserieelement (1) für die Verkleidung eines Dachbogens (2) in einem Kraftfahrzeug, wobei die Karosserie einen rechten Dachbogen (2D) und einen linken Dachbogen (2G) sowie einen vorderen und einen hinteren Querdachbogen (CAV, CAR) aufweist,
wobei das Karosserieelement (1) ausschließlich für die Verkleidung eines rechten Dachbogens (2D) bzw. eines linken Dachbogens (2G) eines Kraftfahrzeugs mit zwei Seitentüren oder eines Kraftfahrzeugs mit vier Seitentüren ausgelegt ist, **dadurch gekennzeichnet, dass** das Karosserieelement (1) mit Griffträgern (5) versehen ist, die mit dem Karosserieelement (1) fest verbunden sind und an Positionen angeordnet sind, die für die zwei erwähnten Fahrzeugversionen geeignet sind.

2. Karosserieelement nach Anspruch 1, **dadurch gekennzeichnet, dass** die Griffträger (5) an das Karosserieelement (1) geschweißt sind.

3. Karosserieelement nach Anspruch 1 oder 2, **dadurch gekennzeichnet, dass** die Griffträger (5) ausgelegt sind, um Griffe durch Einrasten aufzunehmen.

4. Karosserieelement nach Anspruch 1 oder 2, **dadurch gekennzeichnet, dass** die Griffträger (5) ausgelegt sind, um Griffe durch Verschrauben aufzunehmen.

5. Karosserieelement nach einem der Ansprüche 1 bis 4, **dadurch gekennzeichnet, dass** es zwei Griffträger pro Griff aufweist.

6. Karosserieelement nach einem der Ansprüche 1 bis 4, **dadurch gekennzeichnet, dass** es einen Griffträger (5) pro Griff aufweist.

7. Karosserieelement nach einem der Ansprüche 1 bis 6, **dadurch gekennzeichnet, dass** es ein Verstärkungselement (6) aufweist, das dazu bestimmt ist, den Schutz gegen seitliche Stöße zu erhöhen.

8. Karosserieelement nach einem der Ansprüche 1 bis 7, **dadurch gekennzeichnet, dass** es ein verschweißtes Verstärkungselement (6) aufweist, das gegen Verformungen schützt, die sich aus einem seitlichen Stoß ergeben, der durch einen der Querbögen (C) übertragen wird.

9. Kraftfahrzeug, **dadurch gekennzeichnet, dass** es ein Karosserieelement nach einem der Ansprüche 1 bis 8 aufweist.
